# EUROPEAN PATENT APPLICATION

(11) **EP 2 256 380 A1**
(43) Date of publication of application: **01.12.2010**
(21) Application number: 09712923.3
(22) Date of filing: 06.02.2009
(51) Int. Cl.: F16H 63/24, B60K 23/02, F16H 63/36

(54) **INTERLOCK MECHANISM OF GEARBOX**

(30) Priority: 19.02.2008 JP 2008037724
(71) Applicant: Isuzu Motors, Ltd., Shinagawa-Ku Tokyo 140-8722 (JP)
(72) Inventor: AKASHI, Kouhei, Fujisawa-shi Kanagawa 252-8501 (JP); IKEDA, Tadashi, Fujisawa-shi Kanagawa 252-8501 (JP)
(74) Representative: MERH-IP Matias Erny Reichl Hoffmann
(86) International application number: PCT/JP2009/052033
(87) International publication number: WO 2009/104484

(57) **Abstract**

An interlocking mechanism for preventing the double meshing of a transmission, which is constituted by using a rotary lock drum to produce a reliable locking action and can be excellently adapted to various transmissions. In the interlocking mechanism, fork-operation members and fork-fixing members LP1 to LP4 are coupled to a plurality of forks for changing the gears, and are fitted to a plurality of lock drum grooves of a lock drum LD that is rotatably supported. The lock drum grooves are forming narrow portions with their width being nearly equal to that of the fork-fixing members and wide portions wider than the fork-fixing members in a manner that the fork-fixing members positioned at the narrow portions are shifted depending upon the rotation of the lock drum LD. The lock drum LD is rotated by a select motor 7 in synchronism with a shift drum 4, permits the motions of the fork operation members at the wide portions as they are shifted by the reciprocal motion of the shift drum 4 but locks the motions of the other fork operation members by the fork-fixing members at the narrow portions.

## Description

### Technical Field:

This invention relates to an interlocking mechanism which is provided for a transmission of a vehicle and prevents the occurrence of double meshing in which a plurality of speed change gears for transmitting power are brought in mesh simultaneously.

As the power transmission devices of vehicles, there have been proposed various kinds of speed-changing devices for automatically carrying out the operation of the transmission requiring no clutch operation for easy driving and for reducing fatigue to the drivers. A representative example may be an automatic transmission (AT) incorporating a torque converter and planetary gears. Among the automatic speed-changing devices, however, there exists a power transmission device that uses a transmission of the type of parallel shaft gear mechanism similar to the manual transmission (MT). In this power transmission device, the gear is shifted responsive to a driver's instruction or an instruction from an electronic control device such as a computer, and the transmission is equipped with an actuator for shifting the gear responsive to the instruction.

The transmission of the type of parallel shaft gear mechanism has a dog clutch of the type which moves, by using a bifurcated fork, a speed-changing sleeve that engages with the dog teeth integral with the gear to shift the gear. In the operation for changing the speed, one of a plurality of shift rods (often called fork shafts) arranged in parallel is moved in the axial direction to bring the speed-changing sleeve for power transmission into mesh with the dog teeth via a fork coupled to the shift rod or to release them. The transmission incorporates the speed change device for executing the above operation while the speed change device is equipped with a shift rod operation member such as shift-and-select lever for moving the shift rod. The shift rod operation member selects a shift rod that is to be moved (select), and is allowed to move in a direction at right angles with the shift rod and in the axial direction thereof to move the fork in the axial direction to bring (shift) the speed-changing sleeve into mesh. Some transmissions incorporate a speed change device which has no shift rod but works to shift the fork fitted directly into the speed-changing sleeve. Hereinafter, the members such as the shift rod for moving the fork, inclusive of those provided for the fork itself are often referred to as fork operation members.

The transmission of the type of parallel shaft gear mechanism for automatically changing the gear is provided with a select actuator for operating the shift rod operation member in the direction of selection and a shift actuator for operating the shift rod operation member in the direction of shift. As the actuator, there has recently been developed an electric actuator using an electric motor as a drive source to substitute for a fluid pressure actuator that is heavy and requires a fluid pressure source. A speed change device using the electric actuator has been disclosed in, for example, JP-A-2002-349697.

There has further been proposed a speed change device equipped with a cylindrical cam drum and in which a pin of a fork operation member is fitted into a cam groove having a tilted portion formed in the surface thereof, and the cam drum is rotated to move the fork of the speed-changing sleeve in the direction of shift. The above speed change device has been disclosed, for example, in Japanese Utility Model Registration No. 2527834. If compared to the ordinary speed change device which selects and shifts one of a plurality of shift rods integral with the forks by using a shift rod operation member, the above speed change device is capable of executing the operation for changing the speed by using a single cam drum offering an advantage of compact structure.

A transmission having a multiplicity of gears may be seriously damaged if the so-called double meshing happens to occur in which dog clutches of a plurality of gears for transmitting power engage simultaneously. To avoid this, therefore, the speed change device is provided with an interlocking mechanism for preventing double meshing by blocking the motions of the members other than the fork that is operated at the time of shifting the gear. There are interlocking mechanisms of various types. In a general transmission, however, interlocking pins (or interlocking balls) are provided among a plurality of shift rods which are the fork operation members, and are inserted in the recessed portions of other shift rods by the motion of the shift rod that is selected to thereby lock the motion of the other shift rods. An interlocking mechanism of the type of interlocking pins has been disclosed in, for example, JP-A-2002-147603. Fig. 8 shows the interlocking mechanism disclosed in this publication.

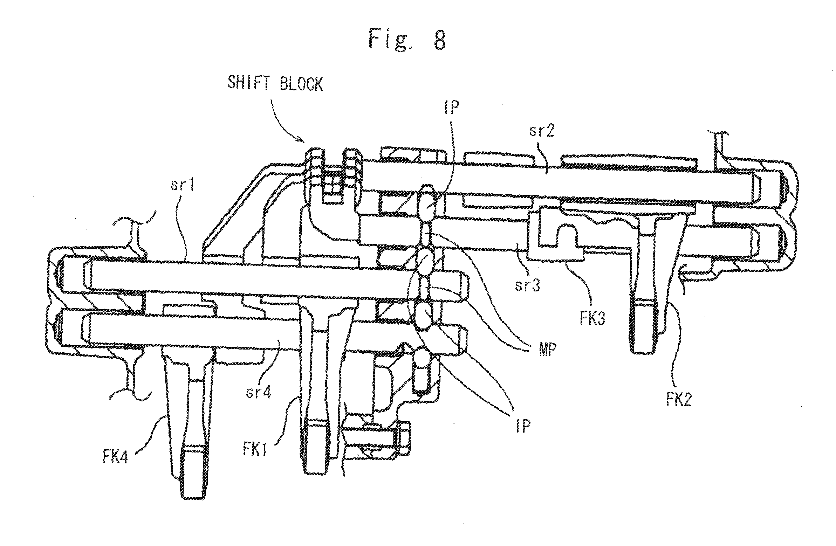

The speed change device of Fig. 8 has four shift rods sr1 to sr4 which are the fork operation members arranged in parallel. Forks FK1 to FK4 are coupled to these shift rods to move speed-changing sleeves. In the transmission casing that slidably supports the shift rods, three interlocking pins IP are arranged on a straight line and are installed at positions where they face the recessed portions formed in the shift rods. Through holes are formed in the intermediate shift rods sr2 and sr3 in a transverse direction, and intermediate pins MP are inserted in the through holes so as to come in contact with the interlocking pins.
If any one of the shift rods sr1 to sr4 is selected and is shifted in the axial direction by using a shift rod operation member that is not shown, the interlocking pin positioned in the recessed portion of the shift rod moves outward in the radial direction of the shift rod being pushed by the wall of the recessed portion. Therefore, the interlocking pins which face the recessed portions of the other shift rods are pushed by the intermediate pins to fit into the recessed portions to thereby lock the motions of the other shift rods and the forks coupled thereto. Not only at the time of the shifting operation but also during the normal traveling of a vehicle, the interlocking mechanism plays the role of holding the positions of the forks in a state where the meshing is released (neutral position) to prevent the unexpected occurrence of double meshing that might be caused by vibration and the like while the vehicle is traveling.
Patent document 1: JP-A-2002-349697
Patent document 2: Japanese Utility Model Registration No. 2527834
Patent document 3: JP-A-2002-147603

### Disclosure of the Invention:

### Problems that the Invention is to Solve:

The interlocking mechanism of the type of interlocking pins is simple in constitution and can be easily produced using constituent parts of simple shapes. In this interlocking mechanism, however, only after the selected fork operation member is moved in the direction of shift, the other fork operation members are locked. Therefore, no locking action is produced before the fork operation member is shifted. At a moment when the selected fork operation member starts moving, if the other fork operation members receive an external force in the direction of shift due to friction among the parts or due to the force of inertia produced by the accelerating vehicle, then it is probable that the plurality of fork operation members start moving simultaneously causing the speed change device as a whole to be locked. The locking force that generates is affected by the arrangement of the parts and by a variation in the relative distance. Therefore, in case the parts are worn out due to aging, the locking force may decrease and double meshing may occur.

In the transmission of a particular structure, further, a plurality of fork operation members must be placed at mesh positions simultaneously. The interlocking mechanism of the type of interlocking pins, however, is not capable of effecting the above operation. In a dual clutch type transmission (often called twin clutch type transmission) having two clutches and two input shafts connected to the respective clutches, for example, the gear is shifted while controlling the connection of the two clutches in a state where the gears of the two input shafts are engaged. If it is attempted to employ the interlocking mechanism of the type of interlocking pins for the above transmission, then the interlocking mechanisms must be provided in a plural number for the transmission paths of the shifting operation causing the speed change device to become complex. In the interlocking mechanism of the type of interlocking pins, further, the plurality of fork operation members must be provided on the wall of the transmission casing to support them in common posing, however, a limitation on the layout.
The problem of the present invention is to provide a speed change device which constitutes an interlocking mechanism that reliably prevents the double meshing by using a cylindrical drum solving the above-mentioned problems, and to provide a speed change device equipped with a fork operation mechanism and an interlocking mechanism suited for the dual clutch type transmission.

### Means for Solving the Problems:

In view of the above problems, the present invention provides an interlocking mechanism for a speed change device, in which fork operation members and fork-fixing members are coupled to a plurality of forks, a cylindrical lock drum is installed having grooves and forming narrow portions and wide portions therein, the fork-fixing members are fitted into the grooves, and the forks that are not to be shifted are locked by the fork-fixing members that are fitted into the narrow portions in the grooves of the lock drum. Namely, the present invention is concerned with "an interlocking mechanism provided for a speed change device that works to shift the gears of a transmission, the transmission comprising a plurality of speed-changing sleeves that move in the axial direction to shift the gear, and a plurality of forks for moving the speed-changing sleeves; wherein,
the speed change device includes a shift operation mechanism for moving, in the axial direction, fork operation members coupled to the plurality of forks, and a select operation mechanism for selecting a fork that moves at the time of shifting the gear;
fork-fixing members are coupled to the plurality of forks;
a cylindrical lock drum is installed to rotate in synchronism with the operation of the select operation mechanism, but being fixed in the axial direction;
the cylindrical surface of the lock drum is forming a plurality of lock drum grooves into which the fork-fixing members are fitted, the lock drum grooves are each forming, continuously in the circumferential direction, narrow portions with their both sides of the groove being perpendicular to the axial direction and having a width in the axial direction nearly equal to that of the fork-fixing members and wide portions having a groove width in the axial direction wider than that of the fork-fixing members, the narrow portions and the wide portions in the plurality of the lock drum grooves being so provided that the fork-fixing members positioned at the narrow portions are shifted depending upon the rotation of the lock drum; and
the fork-fixing members positioned at the narrow portions of the lock drum grooves are selected by the rotation of the lock drum, and the motions of the selected fork-fixing members in the axial direction are blocked by the lock drum grooves."

As described in claim 2, the speed change device includes a cylindrical shift drum that is reciprocally moved in the axial direction by the shift operation mechanism and is rotated by the select operation mechanism, and the lock drum rotates in synchronism with the shift drum.

In the speed change device including the cylindrical shift drum of claim 2 as described in claim 3;
"the cylindrical surface of the shift drum is forming a plurality of shift drum grooves into which the fork operation members are fitted;
the shift drum grooves are each forming, continuously in the circumferential direction, narrow portions with their both sides of the groove being perpendicular to the axial direction of the shift drum and having a width in the axial direction nearly equal to that of the fork operation members and wide portions having a groove width in the axial direction wider than that of the fork operation members, the narrow portions and the wide portions in the plurality of the shift drum grooves and the lock drum grooves being so provided that the fork operation members positioned at the narrow portions of the shift drum grooves are shifted depending upon the rotation of the shift drum, and either the fork operation members or the fork-fixing members coupled to the same forks are positioned at the wide portions when the other ones are positioned at the narrow portions; and
the fork operation members positioned at the narrow portions of the shift drum grooves are selected by the rotation of the shift drum, and the selected fork operation members are moved in the axial direction by the reciprocal motion of the shift drum."

In the speed change device in which the shift drum is provided with shift drum grooves of claim 3, as described in claim 4, it is desired that the plurality of the fork operation members are linearly arranged in the axial direction of the shift drum, and the plurality of the fork-fixing members are linearly arranged in the axial direction of the lock drum. As described in claim 5, further, the diameter of the lock drum is desirably set to be smaller than the diameter of the shift drum.

In the speed change device including the cylindrical shift drum of claim 2, as described in claim 6, the shift drum is fitted onto a rotary drum sleeve so as to reciprocally move but so as not to rotate, and is screw-coupled to a threaded shaft that is arranged penetrating through the drum sleeve in concentric with the drum sleeve, the lock drum is coupled to the drum sleeve via a transmission device, the select operation mechanism rotates the drum sleeve, and the shift operation mechanism rotates the threaded shaft.

As described in claim 7, the interlocking mechanism for the speed change device of the invention is desirably used for a dual clutch type transmission having two clutches and two input shafts connected to the respective clutches.

### Effects of the Invention:

In the interlocking mechanism of the present invention, a cylindrical lock drum is installed having a plurality of lock drum grooves into which are fitted fork-fixing members that are coupled to a plurality of forks. The lock drum grooves are each forming, continuously in the circumferential direction, narrow portions with their width in the axial direction being nearly equal to that of the fork-fixing members and wide portions wider than that of the fork-fixing member. Upon rotating the lock drum in synchronism with the operation of the select operation mechanism, the fork-fixing members, except the selected fork operation members, are positioned in the narrow portions in the lock drum grooves and are prevented from moving.
In the interlocking mechanism of the present invention, before the selected fork operation member is moved in the direction of shift, the fork-fixing members of the other forks are positioned in the narrow portions of the lock drum grooves to reliably lock their motions. According to the interlocking mechanism of the present invention unlike the interlocking mechanism of the type of interlocking pins, therefore, even if the selected fork operation member is shifted, the other forks do not start moving that may be caused by friction among the parts, avoiding such probabilities that the speed change device as a whole is locked or the locking force decreases due to the worn-out parts.

In the interlocking mechanism of the present invention, the narrow portions and the wide portions in the lock drum grooves are so shaped and arranged that the forks of which the motions are to be blocked can be arbitrarily selected depending on the operation of the select operation mechanism. It is, therefore, allowed to place the dog clutches of two gears in a state of being engaged simultaneously and to execute the shifting operation for shifting a plurality of fork operation members simultaneously. This feature is suited for a transmission that requires a complex shifting operation, such as the dual clutch type transmission of the invention of claim 7. Further, according to the interlocking mechanism of the present invention unlike the interlocking mechanism of the type of interlocking pins, the transmission casing does not have to be provided with a wall for supporting the plurality of fork operation members in common offering an increased degree of freedom on the layout.

In the invention of claim 2, a cylindrical shift drum is provided so as to reciprocally move in the axial direction and to rotate, and is operated by the shift operation mechanism and the select operation mechanism of the speed change device. Namely, the select operation is effected by rotating the shift drum, and the shift drum and the lock drum are coupled together via a transmission device such as gear or the like. Thus, the lock drum is rotated in synchronism with the select operation mechanism relying on a simple structure.

In the invention of claim 3, the cylindrical surface of the shift drum, which can reciprocally move and rotate, of the invention of claim 2 is forming a plurality of shift drum grooves in which narrow portions and wide portions are continuously formed in the circumferential direction like in the lock drum grooves, and a plurality of fork operation members are fitted into the shift drum grooves. The narrow portions and the wide portions in the plurality of the shift drum grooves are so provided that the fork operation members positioned at the narrow portions are shifted depending upon the rotation of the shift drum and that the fork-fixing members coupled to the forks same as the fork operation members positioned at the narrow portions are positioned at the wide portions of the lock drum grooves. Namely, the fork operation members and the fork-fixing members coupled to the same forks are such that when either ones are positioned at the narrow portions, the other ones are positioned at the wide portions.
At the time of shifting the gear of the transmission, the shift drum is rotated by driving the select operation mechanism so that the fork operation members coupled to the forks that are shifted are positioned at the narrow portions in the drum grooves. Due to this rotation, the fork-fixing members of the selected forks are brought to the wide portions in the lock drum grooves and the fork-fixing members of the other forks are brought to the narrow portions. Next, if the shift drum is displaced in the axial direction by the shift operation mechanism, only the fork operation members positioned at the narrow portions move in the axial direction together with the shift drum, but the other fork operation members positioned at the wide portions of the shift drum do not move. The lock drum so acts as to permit the motion of the fork-fixing members of the selected forks by the wide portions but to block the motion of the other forks by the narrow portions.

As described above, the speed change device of the invention of claim 3 selects the forks that are to be shifted by the rotation of the shift drum and shifts the forks by the motion of the shift drum in the axial direction; i.e., the select operation and the shift operation are independently executed by the rotation and reciprocal motion of the shift drum. Namely, unlike the prior art of the patent document 2 in which the fork is selected and is also shifted in the axial direction by the rotation of the cam drum, the drum grooves formed in the cylindrical surface of the shift drum of the invention of claim 3 do not have to be provided with tilted portions for moving the forks in the axial direction. Therefore, the outer diameter of the shift drum can be greatly decreased as compared to that of the conventional cam drum, a decreased rotational torque is required for the rotation, driving devices of small sizes suffice the need, and the speed change device as a whole is constructed in a compact size. Further, the shift drum grooves have no tilted portions on which the fork operation members slide, avoiding slide resistance at the time of shifting the fork operation members and a decrease in the transmission efficiency caused thereby and without causing the contact surfaces to be worn out.

In the speed change device in which the shift drum is provided with shift drum grooves of the invention of claim 3 as described in claim 4, the plurality of the fork operation members are linearly arranged in the axial direction of the shift drum, and the plurality of the fork-fixing members are linearly arranged in the axial direction of the lock drum. In this case, the speed change device as a whole is constituted in a compact size. Unlike the narrow portions in the shift drum grooves to which the reaction of the synchronizing mechanism acts at the time of shifting the fork operation members, further, the narrow portions in the lock drum grooves of the lock drum work to simply hold the fork-fixing members at a neutral position where meshing is released. As in the invention of claim 5, therefore, the diameter of the lock drum can be set to be smaller than the diameter of the shift drum, and a more compact constitution can be realized.

The invention of claim 6 is concerned to the speed change device of the invention of claim 2, wherein the shift drum is fitted onto a rotary drum sleeve so as to slide but so as not to rotate, and is screw-coupled to a threaded shaft that is arranged penetrating through the drum sleeve in concentric with the drum sleeve, and the lock drum is coupled to the drum sleeve via a transmission device. If the drum sleeve rotates, both the shift drum and the lock drum rotate to simultaneously execute the action for preventing the select operation and the action for preventing the double meshing. The threaded shaft constitutes the so-called feed screw mechanism. Upon rotating the threaded shaft, the shift drum reciprocally moves in the axial direction to execute the shift operation. In this speed change device, the drum sleeve and the shift drum are arranged in concentric with the rotary threaded shaft. Therefore, the speed change device as a whole is constituted in a small size.

### Brief Description of the Drawings:

[Fig. 1] is a diagram schematically illustrating a dual clutch type transmission to which a speed change device of the invention is adapted.
[Fig. 2] is a view illustrating a gear-changing device using a speed-changing sleeve.
[Fig. 3] is a view showing the whole constitution of an embodiment of the speed change device using an interlocking mechanism of the present invention.
[Fig. 4] is a view showing the appearance of a major portion in the speed change device of [Fig. 3].
[Fig. 5] is an expansion plan of the shift drum grooves and the lock drum grooves in the speed change device of [Fig. 3].
[Fig. 6] is a diagram illustrating the operation of the speed change device.
[Fig. 7] is a view illustrating the constitution of a major portion in the speed change device using the interlocking mechanism according to another embodiment of the present invention.
[Fig. 8] is a view showing a conventional interlocking mechanism.

### Description of Reference Numerals:

- 1: threaded shaft
- 2: casing
- 3: drum sleeve
- 4, 4Z: shift drums
- 41 to 44: shift drum grooves
- 5: nut body
- 6: select motor
- 7: shift motor
- F1 to F4: forks
- FP1 to FP4: fork pins (fork operation members)
- LD: lock drum
- LD1 to LD4: lock drum grooves
- LP1 to LP4: lock pins (fork-fixing members)
- ZL: shift-and-select lever

### Best Mode for Carrying Out the Invention:

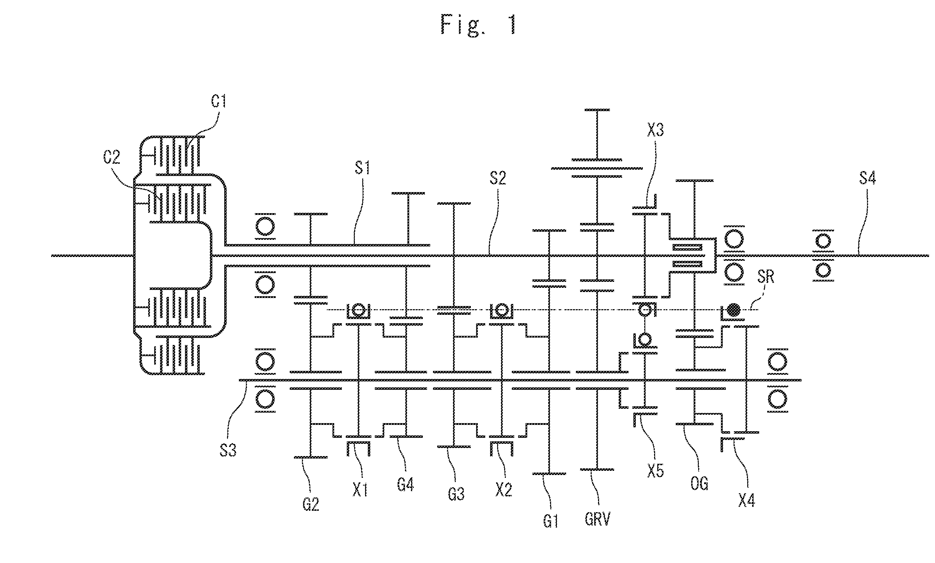

An embodiment of the speed change device of the invention will now be described with reference to the drawings. In this embodiment, the invention is adapted to the speed change device of the dual clutch type transmission. First, the structure and operation of the dual clutch type transmission will be briefly described with reference to Fig. 1.

In the dual clutch type transmission, there are arranged a first input shaft S1 and a second input shaft S2 of a double tubular structure, the second input shaft S2 extending rearward penetrating through the first hollow input shaft S1. At the front parts of the input shafts, there are provided a first clutch C1 and a second clutch C2 of the type of wet multiple disks arranged in concentric, the input sides of the respective clutches being connected to an engine output shaft. An intermediate shaft (counter shaft) S3 is installed in parallel with these input shafts, and an output shaft S4 of the transmission continuous to a propeller shaft of the vehicle is arranged on the rear side of the transmission. The output shaft S4 is coupled to the intermediate shaft S3 through an output shaft drive gear train OG and is also coupled to the second input shaft S2 through a direct connection clutch X3. The engine power is transmitted to the output shaft S4 through the intermediate shaft S3 and the output shaft drive gear train OG or through the direct connection clutch X3. The dual clutch type transmission of Fig. 1 is equipped with a disconnecting clutch X4 for disconnecting the transmission through the output shaft drive gear train OG.

To change the speed, many gear trains having different reduction ratios are arranged between the first input shaft S1, second input shaft S2 and the intermediate shaft S3. On the first input shaft S1, there are arranged fixed gears of even speeds, such as a second speed gear train G2 and a fourth speed gear train G4. On the second input shaft S2, on the other hand, there are arranged a first speed gear train G1 and a third speed gear train G3 which are the odd speed gears, as well as fixed gears of a reverse gear train GRV. The fixed gears are in mesh with loose-fit gears that are loosely fitted to the intermediate shaft S3, i.e., that are rotatably fitted thereto. Thus, gear trains of every other speed are arranged on each of the input shafts of the dual clutch type transmission.

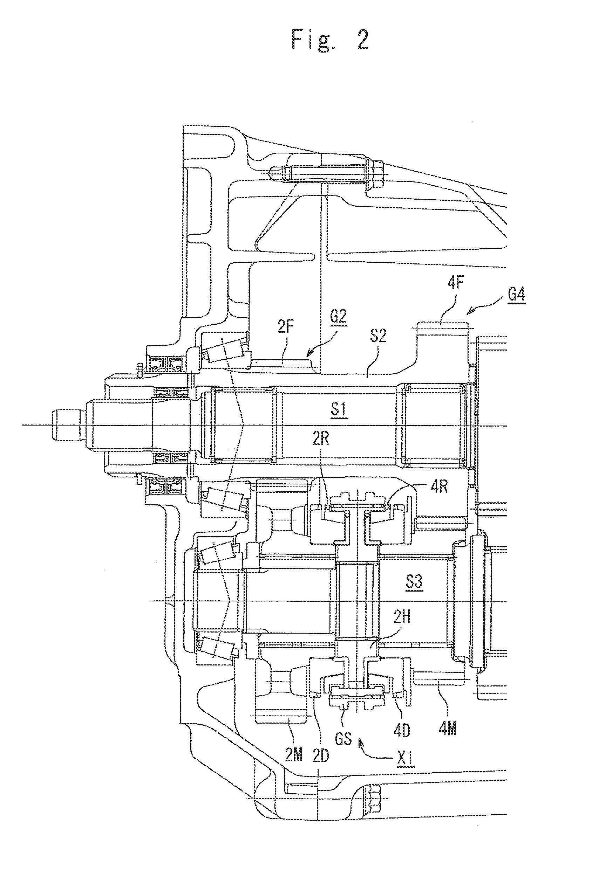

The gears loosely fitted to the intermediate shaft S3 have dog gears formed integrally therewith. On the intermediate shaft S3, further, there are installed a second speed-fourth speed changing device X1 and a first speed-third speed changing device X2. These changing devices are the changing devices of the dog clutch type that are generally used for the transmission of the type of parallel shaft gear mechanism. The structure thereof will now be described with reference to Fig. 2 which is a detailed drawing of the second speed-fourth speed changing device X1.
The hollow first input shaft S1 has a fixed gear 2F of the second speed gear train G2 and a fixed gear 4F of the fourth speed gear train G4 that are formed integrally therewith and are in mesh with a loose-fit gear 2M of the second speed and with a loose-fit gear 4M of the fourth speed. The two loose-fit gears have dog teeth 2D and 4D attached thereto integrally, and a clutch hub 2H is arranged therebetween being fixed to the intermediate shaft S3. A speed-changing sleeve GS is fitted onto the outer circumference of the clutch hub 2H, the speed-changing sleeve GS having splines to mesh with the dog teeth 2D and 4D. Synchronizer rings 2R and 4R of a synchronizing mechanism are arranged among the dog teeth 2D, 4D and the speed-changing sleeve GS. To change the speed, the speed-changing sleeve GS can be slid in two directions, i.e., right and left directions by using a bifurcated fork that is fitted into a recessed groove formed in the outer periphery thereof but that is not shown. At the neutral position shown, the transmission of power is interrupted. If the speed-changing sleeve GS is moved toward the left, the power is transmitted through the second speed gear train G2 and if it is moved toward the right, the power is transmitted through the fourth speed gear train G4.

The first input shaft S1 and the second input shaft S2 of the dual clutch type transmission are allowed to rotate independently from each other. At the time of changing the speed, for example, from the first gear to the second gear, therefore, the second speed-fourth speed changing device X1 can be brought in mesh with the second speed gear grain G2 prior to disconnecting the second clutch C2 and prior to releasing the mesh of the first speed-third speed changing device X2. After the second speed-fourth speed changing device X1 is brought in mesh with the second gear in advance, as described above, the second clutch C2 is connected while disconnecting the first clutch C1. Thus, the gear is shifted without substantially interrupting the transmission of engine power, and the shift is realized without the shock of shift. Further, since a large time margin is provided for synchronization, a decreased load such as frictional force acts on the synchronizing mechanism such as synchronizer ring, which is an advantage.

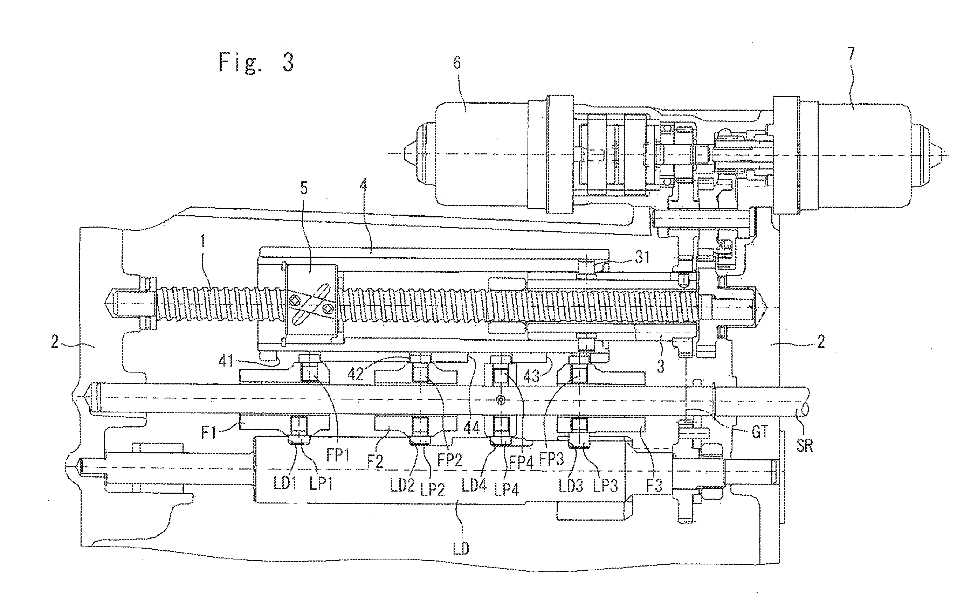

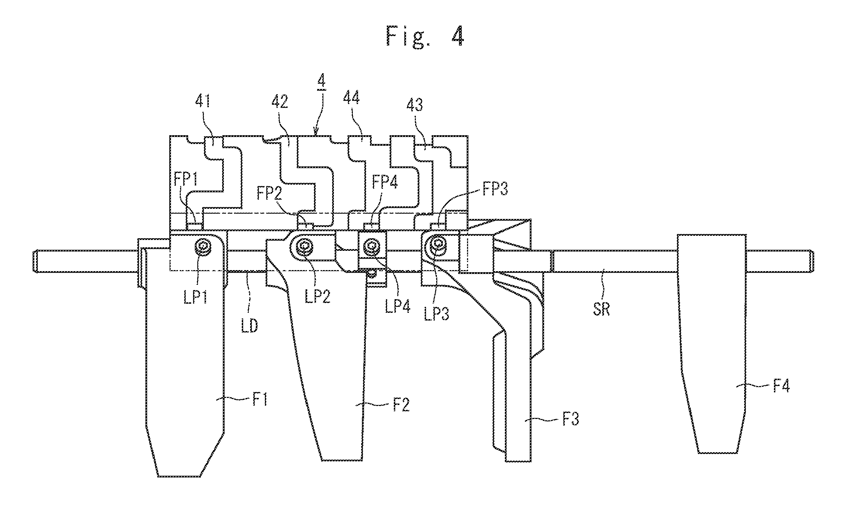

Figs. 3 and 4 are views illustrating the whole speed change device and interlocking mechanism of the invention adapted to the dual clutch type transmission and showing the appearance of a major portion thereof.
Referring to Fig. 3, the speed change device has a threaded shaft 1 extending in the axial direction of the transmission, the threaded shaft 1 being supported at its both ends by a casing 2 of the transmission so as to be rotatable. The drum sleeve 3 is fitted onto the threaded shaft 1. The drum sleeve 3 is in concentric with the threaded shaft 1, rotates about the threaded shaft 1, and has an engaging pin 31 protruding outward. To the drum sleeve 3 is fitted an end of the shift drum 4 that extends in the axial direction. The shift drum 4 has a linear groove formed in the inner surface thereof in the axial direction and in which the engaging pin 31 of the drum sleeve 3 is inserted. The shift drum 4 rotates together with the drum sleeve 3 and reciprocally moves in the axial direction of the drum sleeve 3. Further, a cylindrical lock drum LD is provided in parallel with the shift drum 4, and is supported by a casing 2 of the transmission in a state of being fixed in the axial direction and is, further, coupled to the drum sleeve 3 through a transmission device GT constituted by gears so as to rotate in synchronism with the drum sleeve 3.

The shift drum 4 is fitted at its end portion onto the drum sleeve 3 and has the nut body 5 fixed to an inner portion at the other end thereof, the nut body 5 being integral with the shift drum 4. The nut body 5 together with the threaded shaft 1 constitutes a known ball-and-screw mechanism. Though not shown, the nut body 5 is internally threaded in the same direction as the thread of the threaded shaft 1, and many balls are inserted between the two screw grooves. Therefore, a rotation of the threaded shaft 1 causes the shift drum 4 to move in the axial direction through the ball-and-screw mechanism, and the direction of motion changes depending upon the direction in which the threaded shaft 1 rotates.

The casing 2 of the transmission is provided with a select motor 6 and a shift motor 7 which are electric motors that can be rotated forward and reverse as a drive unit (actuator) to change the speed by driving the shift drum 4. The select motor 6 is coupled to the drum sleeve 3 through a reduction gear and a gear train. Upon rotating the select motor 6, the shift drum 4 rotates about the threaded shaft 1 and, further, the lock drum LD rotates in synchronism with the shift drum 4 through the transmission device GT. On the other hand, the shift motor 7 is coupled to the threaded shaft 1 through a gear train and is rotated to reciprocally move the shift drum 4. As described above, the select motor 6 and the gear train constitute the select operation mechanism for shifting operation, while the shift motor 7 and the threaded shaft 1 constitute the shift operation mechanism.

In the casing 2 of the transmission, a plurality of fork pins FP1 to FP4 that serve as fork operation members are arranged being aligned straight so as to engage with the shift drum 4 (see Fig. 4). These fork pins work to operate the speed-changing sleeves of the dog clutches (changing devices) X1 to X5 in the dual clutch type transmission shown in Fig. 1; i.e., the fork pin FP1 is directly coupled to a fork F1 that operates the speed-changing sleeve of X1, the fork pin FP2 is directly coupled to a fork F2 that operates the speed-changing sleeve of X2, and the fork pin FP3 is directly coupled to a fork F3 that operates the speed-changing sleeves of X3 and X5. On the other hand, a fork F4 for operating the disconnecting clutch of X4 is attached to an end of a shift rod SR to which the fork pin FP4 is fixed. The fork F4 is operated by the shift rod SR that reciprocally moves in the axial direction. As will be obvious from Fig. 3, therefore, the shift rod SR is supported by the casing 2 so as to reciprocally move in the axial direction, and the forks F1 to F3 are fitted onto the shift rod SR so as to slide. The above constitution simplifies the support device that supports the plurality of forks so as to move in the axial direction. The shift rod SR in Fig. 1 is represented by a dot-dash chain line.
The fork pins FP1 to FP4 are, respectively, fitted into shift drum grooves 41 to 44 formed in the cylindrical surface of the shift drum 4. As will be described later, the fork pin selected by the rotation of the shift drum 4 moves in the axial direction due to the reciprocal motion of the shift drum 4.

To the forks F1 to F4 are coupled the fork pins as well as the lock pins LP1 to LP4 which are the fork-fixing members, the lock pins being arranged on a straight line so as to engage with the lock drum LD. In Fig. 3, the fork pins and the lock pins are diagramed at opposing positions for easy comprehension. In practice, however, the fork pins and the lock pins are attached at such angular positions that are separated apart by about 90° as shown in Fig. 4, and the lock drum LD is arranged at a position represented by a two-dot chain line in Fig. 4. The plurality of lock pins LP1 to LP4 are fitted into the lock drum grooves LD1 to LD4 formed in the cylindrical surface of the lock drum LD.

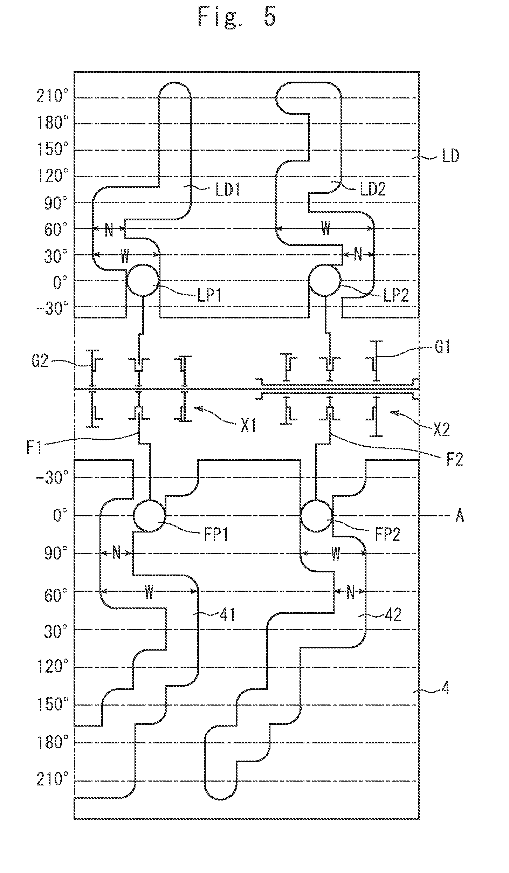

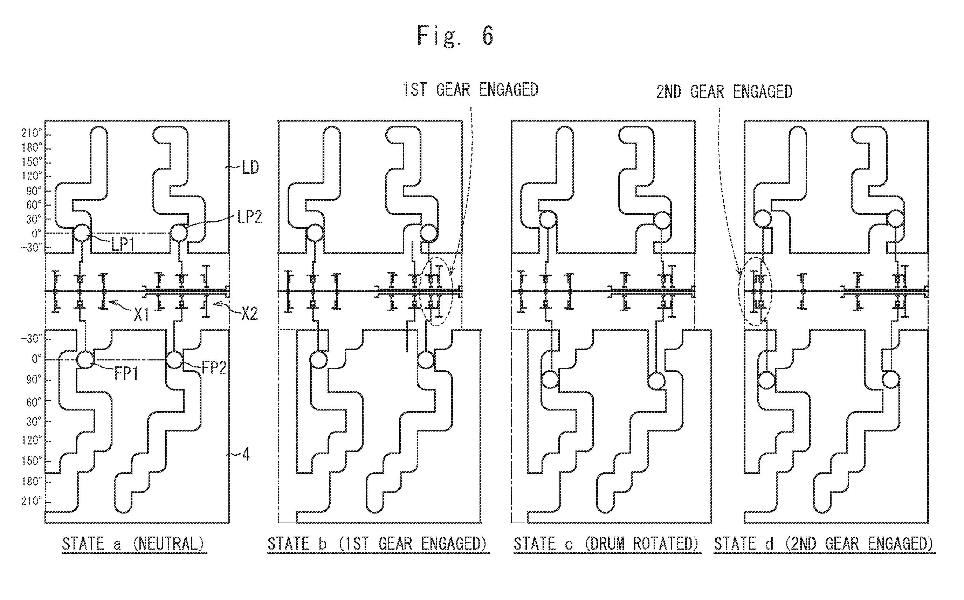

Described below with reference to Figs. 5 and 6 are the shapes of the drum grooves formed in the cylindrical surfaces of the shift drum 4 and the lock drum LD, and the operation of the speed change device of the invention. Fig. 5 is an expansion plan of the drum grooves formed in both drums in relation to the operation of the gear-changing device, and shows a portion for operating the second speed-fourth speed changing device X1 and the first speed-third speed changing device X2 of Fig. 1. Fig. 6 is a diagram of operation illustrating the procedure of shifting operations of the first and second speeds in the portion of Fig. 5.

Referring to the expansion plan of Fig. 5, the drum grooves 41, 42 have narrow portions N having a width in the axial direction nearly equal to that of the fork pins FP1, FP2 and wide portions W having a width in the axial direction wider than that of the fork pins, that are continuously formed in the circumferential direction. Therefore, the fork pin positioned at the narrow portion N (FP2 in the state of Fig. 5) is in a state of being locked on its both sides by the wall surfaces of the shift drum groove in the narrow portion N, whereas the fork pin positioned at the wide portion W (FP1 in the state of Fig. 5) has space on its one side. The wall surfaces on both sides of the shift drum groove in the axial direction are perpendicular, at the narrow portion N, to the axial direction of the cylindrical drum 4, and are basically perpendicular at the wide portion W, too. The corner portions, however, are rounded. These narrow portions N and wide portions W are similarly formed in the shift drum grooves 43 and 44, too, though not shown in Fig. 5.

The lock drum grooves LD1 and LD2 have narrow portions N having a width in the axial direction nearly equal to that of the lock pins LP1, LP2 and wide portions W having a width in the axial direction wider than that of the lock pins. The shift drum 4 and the lock drum LD rotate in synchronism (in this Embodiment, they rotate in phase but in the directions opposite to each other). Here, however, the narrow portions N and the wide portions W in the two drums are such that when either one of the fork pin or the lock pin coupled to the same fork is positioned at the narrow portion, the other one is positioned at the wide portion. Referring to Fig. 5, the fork pin FP1 of the fork F1 of the second speed-fourth speed changing device X1 is positioned at the wide portion W in the shift drum groove 41 and the lock pin LP1 of the fork F1 thereof is at the narrow portion N in the lock drum groove LD1. As for the fork F2 of the first speed-third speed changing device X2, the fork pin FP2 is positioned at the narrow portion N and the lock pin LP2 is positioned at the wide portion W. The same relationship also holds for the drum grooves for the pins of the forks F3 and F4 that are not shown in Fig. 5.

The fork pins FP1 and FP2 on a straight line A in Fig. 5 are at positions where the first speed-third speed changing device X2 and the second speed-fourth speed changing device X1 are released from being in mesh, i.e., are at the neutral positions, and correspond to a state of Fig. 6a. To bring the gear in mesh with the first gear from the neutral state, the threaded shaft 1 is rotated by the shift motor 7 to move the shift drum 4 in the axial direction toward the right in the drawing. Accompanying this motion, the fork pin FP2 positioned at the narrow portion moves toward the right together with the shift drum 4 being pushed by the wall surface on the left side of the shift drum groove 42, and assumes a state b where the speed-changing sleeve of the first speed-third speed changing device X2 is brought in mesh with the first gear. However, the fork pin FP1 (the same also holds for the fork pins FP3, FP4 that are not shown) is positioned at the wide portion in the shift drum groove 41 having a space on the right side thereof, and does not move in the axial direction but stays at that position despite the shift drum 4 is moved toward the right. Therefore, the second speed-fourth speed changing device X1 is not brought in mesh (here, however, the disconnecting clutch X4 is in mesh). Thus, by bringing the first speed-third speed changing device X2 into mesh with the first gear and connecting the clutch C2 of Fig. 1, the vehicle travels with the first speed.

The lock pins LP1 and LP2 fitted into the lock drum grooves LD1 and LD2 in the state a are such that LP1 is positioned at the narrow portion and LP2 is positioned at the wide portion. That is, since the lock pin LP1 coupled to the fork F1 of the second speed-fourth speed changing device X1 is present at the narrow portion, motions of the fork F1 and the fork pin FP1 in the axial direction is blocked by the narrow portion of the lock drum groove. Even if the shift drum 4 moves during the operation for shifting to the first gear, the fork F1 of the second speed-fourth speed changing device X1 is reliably locked by the lock pin LP1 coupled thereto, and undesired motion is prevented for the forks other than the fork that is to be shifted. The fork F2 of the first speed-third speed changing device X2 has the lock pin LP2 coupled thereto positioned at the wide portion, and is not blocked for its motion by the lock pin LP2.

To shift the transmission from the first speed to the second speed as described above, the dual clutch type transmission brings the second gear into mesh while maintaining the first gear in mesh. The speed change device drives the select motor 6 to rotate the drum sleeve 3 as well as the shift drum 4 and the lock drum LD to thereby position the fork pins and the lock pins as in a state c. Next, the shift motor 7 is driven to rotate the threaded shaft 1. The shift drum 4 integral with the nut body 5 moves toward the left in the axial direction causing the fork pin FP1 at the narrow portion to be shifted to assume a state d. As a result of shifting the fork pin FP1, the speed-changing sleeve of the second speed-fourth speed changing device X1 is brought in mesh with the second gear. However, the fork pin FP2 positioned at the wide portion W does not move, and the first speed-third speed changing device X2 is maintained in a state where it is in mesh with the first gear. During the motion, the lock pin LP1 coupled to the fork pin FP1 is at the wide portion and, therefore, the fork pin FP1 is permitted to move. However, the lock pin LP2 is positioned at the narrow potion and locks the motion of the fork pin FP2. In the state d, therefore, if the clutch C1 is connected while disconnecting the clutch C2, the transmission can be shifted from the first gear to the second gear without substantially interrupting the transmission of power from the engine.

The shifting operation such as shifting up from the second gear to the third gear and higher gears, too, is executed like the above operation by driving the select motor 6 to rotate the shift drum 4 to thereby select a fork pin at the narrow portion, and driving the shift motor 7 to reciprocally move the shift drum 4 to thereby shift the selected fork pin. The lock drum LD rotates in synchronism with the shift drum 4 permitting the selected fork pin to move but locking the motion of other fork pins relying upon the lock pins that engage with the wide portions and the narrow portions in the lock drum grooves.
According to the interlocking mechanism of the present invention as described above, the lock drum LD having a plurality of lock drum grooves rotates in synchronism with the select operation mechanism, and the motions of the forks other than the selected fork are blocked by the lock pins positioned at the narrow portions in the lock drum grooves. The forks are locked before the selected fork is moved in the direction of shift. According to the interlocking mechanism of the present invention, therefore, the forks do not start moving simultaneously accompanying the shift of the selected fork caused by friction among the parts, avoiding such a probability that the speed change device as a whole is locked or the locking force decreases due to the wear of the parts. Upon selecting the shapes and arrangement of the narrow portions and the wide portions in the lock drum grooves, further, the fork of which the motion is to be blocked can be arbitrarily selected responsive to the operation of the select operation mechanism.

According to the speed change device of the present invention as described above, the rotation and the reciprocal motion of the shift drum 4 execute the select operation and the shift operation independently. That is, unlike that of the conventional cam drum that has the tilted portions, the shift drum 4 does not select the fork while at the same time shifting the fork by the rotation thereof. Namely, both sides of each shift drum groove in the shift drum 4 in the axial direction are basically forming wall surfaces perpendicular to the axial direction. It is, therefore, allowed to greatly decrease the outer diameter of the shift drum 4 as compared to that of the conventional cam drum, to decrease the rotational torque required for rotating the drum and, hence, to decrease the sizes of the drive devices such as the select motor 6 and the shift motor 7. Since no sliding occurs between the shift drum groove and the fork pin, the contact surfaces are not worn out.

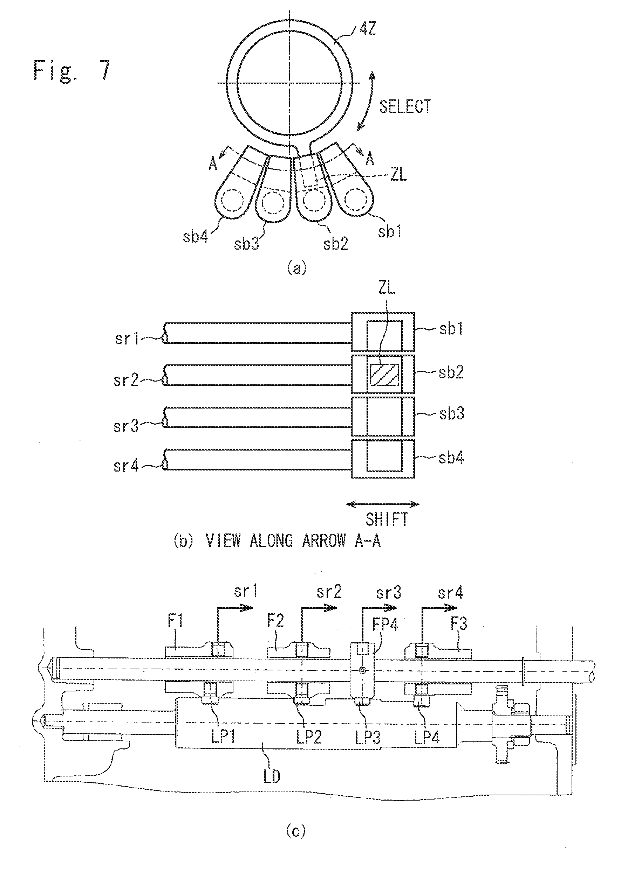

In the above embodiment, the shifting operation is conducted by using the shift drum having drum grooves formed in the cylindrical surface thereof. It is, however, also possible to apply the interlocking mechanism of the present invention to the speed change device of the type in which a plurality of shift rods coupled to the forks are arranged in parallel as the fork operation members and any one shift rod is moved by using the shift-and-select lever. Fig. 7 shows the speed change device of this type and the interlocking mechanism.
Referring to Fig. 7(c), shift rods sr1 to sr4 are coupled, instead of the fork pins, to the forks F1 to F4 that are arranged in the same manner as in Figs. 3 and 4. The shift rods are arranged in parallel at their front end portions, and shift blocks sb1 to sb4 having recessed grooves are fixed to the front end portions (see Fig. 7(b)). The shift blocks of this kind are usually used for the speed change device in the transmission of the type of parallel shaft gear mechanism.

The recessed grooves of the shift blocks are arranged in the transverse direction when the transmission is in the neutral state, and the shift-and-select lever ZL integral with the shift drum 4Z is fitted to one of them (see Figs. 7(a) and (b)). The shift drum 4Z is a drum which is short in the axial direction and is driven by a speed change device similar to the operation mechanism shown in Fig. 1. The shift block to which the shift-and-select lever ZL is fitted is selected by the rotation of the shift drum 4Z so as to shift the fork coupled to the shift block selected by the reciprocal motion thereof.

The lock drum LD is coupled to the shift drum 4Z via the transmission device so as to rotate in synchronism with the shift drum 4Z. The lock pins LP1 to LP4 which are the fork-fixing members are coupled to the forks, and are fitted to the plurality of lock drum grooves formed in the cylindrical surface of the lock drum LD. The wide portions and the narrow portions are formed in the lock drum grooves, and the lock pins are positioned in the narrow portions in the lock drum grooves and are locked for their motion except the lock pin of the fork that is selected by the rotation of the lock drum LD. The constitution and operation of the interlocking mechanism are the same as those of Fig. 1.

### Industrial Applicability

In the interlocking mechanism for a speed change device of the present invention as described above in detail, the fork operation members and the fork-fixing members are coupled to the plurality of forks, the cylindrical lock drum is installed having grooves and forming narrow portions and wide portions therein, the fork-fixing members are fitted into the grooves, and the forks that are not to be shifted are locked by the fork-fixing members that are fitted into the narrow portions in the grooves of the lock drum. It is, therefore, obvious that the present invention can be utilized as an interlocking mechanism for the speed change device in the transmission for vehicles.
The above embodiments are applied to the speed change device that executes the select operation by the rotation of the shift drum. However, the interlocking mechanism of the invention can be further applied to the one which executes the select operation by the linear motion of the shift-and-select lever by rotating the lock drum via a rack-and-pinion mechanism. In the above embodiments, further, the fork-fixing members are arranged on a straight line. The above embodiments, however, can be modified in various ways such as arranging the fork-fixing members at dissimilar angular positions of the lock drum and forming the narrow portions and the wide portions in the lock drum grooves so as to be corresponded thereto.

## Claims

1. An interlocking mechanism for a speed change device that works to shift the gears of a transmission, said transmission comprising a plurality of speed-changing sleeves that move in the axial direction to shift the gear, and a plurality of forks for moving said speed-changing sleeves; wherein,
said speed change device includes a shift operation mechanism for moving, in the axial direction, fork operation members coupled to said plurality of forks, and a select operation mechanism for selecting a fork that moves at the time of shifting the gear;
fork-fixing members are coupled to said plurality of forks;
a cylindrical lock drum is installed to rotate in synchronism with the operation of said select operation mechanism, but being fixed in the axial direction;
the cylindrical surface of said lock drum is forming a plurality of lock drum grooves into which said fork-fixing members are fitted, said lock drum grooves are each forming, continuously in the circumferential direction, narrow portions with their both sides of the groove being perpendicular to the axial direction and having a width in the axial direction nearly equal to that of said fork-fixing members and wide portions having a groove width in the axial direction wider than that of said fork-fixing members, said narrow portions and said wide portions in said plurality of the lock drum grooves being so provided that the fork-fixing members positioned at the narrow portions are shifted depending upon the rotation of said lock drum; and
said fork-fixing members positioned at said narrow portions of said lock drum grooves are selected by the rotation of said lock drum, and the motions of the selected fork-fixing members in the axial direction are blocked by said lock drum grooves.

2. The interlocking mechanism for a speed change device according to claim 1, wherein said speed change device includes a cylindrical shift drum that is reciprocally moved in the axial direction by said shift operation mechanism and is rotated by said select operation mechanism, and said lock drum rotates in synchronism with said shift drum.

3. The interlocking mechanism for a speed change device according to claim 2, wherein the cylindrical surface of said shift drum is forming a plurality of shift drum grooves into which said fork operation members are fitted;
said shift drum grooves are each forming, continuously in the circumferential direction, narrow portions with their both sides of the groove being perpendicular to the axial direction of said shift drum and having a width in the axial direction nearly equal to that of said fork operation members and wide portions having a groove width in the axial direction wider than that of said fork operation members, the narrow portions and the wide portions in the plurality of said shift drum grooves and said lock drum grooves being so provided that said fork operation members positioned at the narrow portions of the shift drum grooves are shifted depending upon the rotation of the shift drum, and either the fork operation members or the fork-fixing members coupled to the same forks are positioned at the wide portions when the other ones are positioned at the narrow portions; and
the fork operation members positioned at the narrow portions of the shift drum grooves are selected by the rotation of the shift drum, and the selected fork operation members are moved in the axial direction by the reciprocal motion of the shift drum.

4. The interlocking mechanism for a speed change device according to claim 3, wherein said plurality of the fork operation members are linearly arranged in the axial direction of said shift drum, and said plurality of the fork-fixing members are linearly arranged in the axial direction of said lock drum.

5. The interlocking mechanism for a speed change device according to claim 4, wherein the diameter of said lock drum is set to be smaller than the diameter of said shift drum.

6. The interlocking mechanism for a speed change device according to claim 2, wherein said shift drum is fitted onto a rotary drum sleeve so as to reciprocally move but so as not to rotate, and is screw-coupled to a threaded shaft that is arranged penetrating through said drum sleeve in concentric with said drum sleeve;
said lock drum is coupled to said drum sleeve via a transmission device; and
said select operation mechanism rotates said drum sleeve, and said shift operation mechanism rotates said threaded shaft.

7. The interlocking mechanism for a speed change device according to claim 1, wherein said transmission is a dual clutch type transmission having two clutches and two input shafts connected to the respective clutches.
